# EUROPEAN PATENT SPECIFICATION

(11) **EP 0 576 809 B1**
(45) Date of publication and mention of the grant of the patent: **08.01.1997**
(21) Application number: 93107644.2
(22) Date of filing: 11.05.1993
(51) Int. Cl.: C03C 10/00, C03C 23/00

(54) **Glass or glass-ceramic articles with anti-adhesive properties for cooking and processes for manufacturing these articles**
Glas- oder Glaskeramikkörper mit Antihaft-Eigenschaften für Küchengebrauch und Verfahren zur Herstellung dieser Körper
Articles en verre ou vitrocéramique à propriétés anti-adhésives pour la cuisine et procédés de fabrication de ces articles

(30) Priority: 29.06.1992 FR 9207960
(43) Date of publication of application: 05.01.1994
(73) Proprietor: Corning Incorporated, Corning New York 14831 (US)
(72) Inventor: Carre, Alain Robert Emile, Corning Incorporated, Corning, NY 14831 (US); Andrieu, Andre, Corning Incorporated, Corning, NY 14831 (US); Ricoult, Daniel Louis G., Corning Incorporated, Corning, NY 14831 (US)
(74) Representative: Reinhard - Skuhra - Weise & Partner

(56) References cited:
- EP-A- 0 311 274
- EP-A- 0 437 228
- GB-A- 1 467 459
- US-A- 2 920 971
- US-A- 3 464 806
- US-A- 3 914 517

## Description

### Background of the Invention

The invention relates to glass or glass-ceramic articles with anti-adhesive properties for cooking, as well as to processes for manufacturing them.

Numerous articles for cooking manifesting anti-adhesive properties with regard to food are available in commerce. These articles usually bear coatings of fluorinated polymers, such as polytetrafluoroethylene, or polysiloxanes. The susceptibility of these coatings to scratching makes these articles not very durable. Moreover, in case of accidental overheating, the effectiveness of the coating decreases and it can even produce the emission of toxic fumes. Finally, these coatings are opaque and therefore do not enable one to manufacture transparent glass or glass-ceramic articles.

The purpose of the present invention is to provide glass or glass-ceramic articles for cooking, which can be transparent if desired, which can be put in direct contact with a source of heat, and which exhibit remarkable properties of low adherence with respect to cooked foods after they have been coated with a thin film of oil or other grease material of alimentary quality.

### Summary of the Invention

The invention is based on the phenomenon of migration towards the surface (exudation) of certain basic or amphoteric metallic oxides incorporated in the mass of certain glasses and glass-ceramics. This phenomenon is known in itself and has been studied particularly in view of applications in the field of electronics. One can, for example refer to U. S. Patent No. 4,084,972 (Andrus et al.), U. S. Patent No. 4,084,973 (Andrus et al.), U. S. Patent No. 3,490,887 (Herczog et al.) and U. S. Patent No. 4,788,165 (Fong et al.). To the knowledge of the applicants, however, it has never been suggested that this phenomenon could have utility in the field of articles for cooking food.

More precisely, the invention relates to articles for cooking food, at which at least the surface part of at least the part of these articles which is intended to be in contact with the foods is comprised of a boroaluminosilicate glass or of a glass-ceramic of the Li₂O-Al₂O₃-SiO₂ system in which a solid solution of β-quartz (also called β-eucryptite) or of β-spodumene constitutes the sole or predominant crystalline phase, which are characterized by the fact that said glass or said glass-ceramic contains 0.5 to 33 weight percent, with respect to the total weight of the glass or modified glass-ceramic, of at least one metal oxide chosen from the copper oxides, iron oxides, manganese oxides, and silver oxides, the concentration of said metal oxide being at least three times greater on the surface of the article than in the body of the article, and said surface part of said articles manifesting a reduced adherence with respect to foods after it has been covered with a film of alimentary grease material.

The glass or glass-ceramic containing the oxide exudate can constitute all of the part of the articles that is intended to come in contact with the foods (hereafter called solid articles) or can constitute only a coating on a different substrate (hereafter called glazed articles).

The invention also relates to a process for manufacturing such a solid cooking article, characterized by the fact that it consists of incorporating 0.5 to 50 parts by weight of at least one metal oxide exudate chosen from the copper oxides, iron oxides, manganese oxides, and silver oxides in 100 parts by weight of a starting vitrifiable batch, melting this batch, cooling the molten mass of glass into its transformation range and converting it into an article of the desired shape, and then, in some order, subjecting the glass article to a first thermal treatment inducing exudation of said exudant oxide and, if applicable, to a second thermal treatment to bring about the conversion of the glass into a glass-ceramic.

The invention also relates to a process for the manufacture of a glazed cooking article, characterized by the fact that it consists of incorporating 0.5 to 50 parts by weight of at least one metal oxide exudate chosen from the copper oxides, iron oxides, manganese oxides, and silver oxides in 100 parts by weight of a glaze composition based on boroaluminosilicate glass, of applying a layer of this glaze composition onto a suitable substrate, of heating the applied layer until it melts, and then of subjecting the resulting glazed article to a thermal treatment inducing exudation of the oxide exudate.

The boroaluminosilicate glasses or the glass-ceramic of the aforementioned Li₂O-Al₂O₃-SiO₂ system can form all of the part of the articles intended to be in contact with the food, or only a surface coating (such as a glaze) applied on a different substrate, for example, a metal.

The boroaluminosilicate glass or the glass-ceramic of the Li₂O-Al₂O₃-SiO₂ system of which the single or predominant crystal phase is a solid solution of β-quartz or of β-spodumene are well known in the art, and it does not seem necessary to describe them again here. For all useful purposes, one can refer for more details to the following patents: U. S. Patent No. 2,920,971 (Stookey) and U. S. Patent No. 5,070,045 (Comte et al.).

The aforementioned glass and glass-ceramics, besides lending themselves well to the phenomenon of exudation, which is at the basis of the present invention, are also well suited for the production of cooking articles.

The proportion of oxide exudate incorporated in the starting batch is not very critical and can range, for example, from 0.5 to 50 parts by weight, preferably from 0.5 to 10 parts by weight for the glass-ceramics, from 1 to 40 parts by weight for the glasses, and from 8 to 30 parts by weight for the glazes, per 100 parts by weight of the ingredients of the batch. The optimum quantity to be used will vary with the type of oxide exudate, the thermal treatment or treatments applied, and the type of material (glass or glass-ceramic).

As the oxide exudate, one can use the copper oxides, iron II and III oxides, manganese oxides, silver oxides, or a mixture of two or more of these oxides. The oxidation state of these oxides is not critical, and one can, for example, use Cu₂O as well as CuO, FeO as well as Fe₂O₃, Mn₂O₃ or MnO₂, Ag₂O or AgO. The copper oxides are currently preferred because they exude the most easily.

The thermal treatment bringing about the exudation of the oxide exudate is conducted at a temperature and for a period of time which depend greatly on the specific oxide exudate used. The copper oxides begin to exude by 300°C, but in practice, for reasons of industrial productivity, one will have recourse to a temperature of at least 500°C. The other oxide exudates require much higher temperatures, for example, at least 700°C. The maximum temperature for the exudation treatment will vary as a function of the nature of the material incorporating the oxide exudate, particularly according to whether it is a glass or glass-ceramic. Theoretically, one can go up to temperatures approaching the softening point of the material. The thermal exudation treatment can be conducted in air or in a controlled reducing atmosphere. In the latter case, the oxide which is found on the surface of the article will usually be in its minimum oxidation state. This exuded oxide nevertheless tends to be reoxidized during the course of utilization of the article.

The duration of the exudation treatment will likewise be a function of the type of oxide exudate, of the treatment temperature, and of the type of glass or glass-ceramic incorporating it. Generally, the higher the treatment temperature, the shorter the duration of treatment can be. Purely as an indication, one can have recourse to durations of exudation treatment ranging from 0.5 hour to several days.

The concentration of the oxide exuded to the surface of the article must be at least 3 times higher than at the center of it if one wishes to obtain satisfactory anti-adhesive properties. It will frequently be 10 times higher or more. In fact, in certain cases, the surface of the article can even be constituted entirely or almost entirely of the exuded oxide.

It is appropriate to also proceed with a thermal crystallization treatment designed to convert the starting glass into a glass-ceramic; this thermal treatment can be performed either before or after the thermal exudation treatment. The thermal crystallization treatment is performed under the usual conditions recommended for the glass-ceramic which is concerned. This thermal treatment can be performed in one or two stages. In the case of a treatment in two stages, the precursor glass article is first heated to a temperature T1 slightly higher than the transformation range of the glass in order to initiate the development of the nuclei or seeds; the glass thus "nucleated" is then heated to a higher temperature T2, higher than the softening point of the glass, in order to promote the growth of crystals on the nuclei. In the variant with a single stage, one immediately heats the article to a temperature T2 higher than the softening point without a marked stage at T1; sufficient nucleation occurs

The articles of the invention can be manufactured in various forms, such as saucepans, frying pans, shallow pans, gratin pans, cake molds, etc.

The articles of the invention acquire their anti-adhesive properties after having been coated with a film of alimentary grease material, for example, alimentary oil (sunflower oil, peanut oil, olive oil, etc.), butter or margarine.

### Description of Preferred Embodiments

The following nonlimiting examples are given to illustrate the invention.

### Testing of the articles

A comparison of the behavior of the articles of the invention and that of glass or glass-ceramic articles of the prior art was effected with the aid of wetting tests and a food-cooking test.

### Wettability by oil

This is measured by pouring a drop of sunflower oil onto the article to be tested, then measuring the angle of junction θₒ of the triple solid/liquid/air interface with the aid of a specific goniometer. Perfect wetting by the oil corresponds to an angle θₒ of zero.

### Displacement of oil by water

In order to evaluate the possibility of the oil covering the cooking surface of the article to be displaced from this surface by the food deposited on this surface, one can also measure the angle of junction θ_{wo} of a drop of water deposited on a surface of the article covered with oil. A total displacement of the oil corresponds to an angle θ_{wo} near zero and a nondisplacement of the oil to an angle θ_{wo} close to 180°. One estimates that the higher the angle θ_{wo}, the less will be the adherence of the food in the presence of oil.

### Cooking of food

One tests the non-adherence of foods to the articles of the invention by cooking crepes in a frying pan according to the invention and in a frying pan according to the prior art. One utilizes the following recipe which provides particularly sticky crepes: 200 g of wheat flour, 250 g of liquid cane sugar, and 150 g of skimmed milk. The cooking surface is heated to 200°C, and one applies a film of sunflower oil by means of a wad of paper soaked with oil before pouring in the measure of crepe paste. The article is qualified as nonsticking if the crepe, once it is cooked, can be easily removed from the frying pan. On a frying pan made of a commercial glass-ceramic, the crepe is always torn when one attempts to remove it.

One also determines, in one case, the chemical durability of the articles of the invention by again subjecting them to the aforementioned cooking test after having been left in contact with a 5-weight percent detergent solution of Na₂CO₃ at 95°C for 4 hours.

The following nonlimiting examples are given to illustrate the invention.

### Examples 1 to 16

One utilizes various glass compositions, with or without the addition of a metal oxide exudate, in order to manufacture articles intended for cooking food. Each composition was placed in a crucible, put in a furnace at 1650°C until completely melted, poured into a mold, and pressed into the desired article by the usual techniques; the article was then either simply annealed or converted into a glass-ceramic article by a thermal treatment, then subjected to a post treatment designed to bring about exudation. One subjects the articles obtained to the above-mentioned tests. Tables I and II summarize the base glass compositions, the oxide exudates added, the conditions of the thermal treatment or treatments for ceramic formation (ceramming treatments), and the results of the tests.

The ceramming treatments performed in the vicinity of 900-925°C can produce a transparent glass-ceramic based on β-quartz, while the treatments performed above 1,100°C produce opaque glass-ceramics based on β-spodumene, with the compositions mentioned in Table I.

**TABLE I**

| Base Glass compositions, in Weight % on the Oxide Basis | | | | | |
|---|---|---|---|---|---|
| Composition No. Constituents | I | II | III | IV | V |
| SiO₂ | 67.37 | 68.90 | 66.00 | 69.90 | 69.44 |
| B₂O₃ | -- | -- | 20.00 | -- | -- |
| Al₂O₃ | 19.25 | 19.60 | 12.30 | 20.90 | 18.04 |
| TiO₂ | 2.78 | 2.70 | -- | 4.10 | 4.76 |
| ZrO₂ | 1.87 | 1.80 | -- | -- | -- |
| MgO | 1.24 | 1.80 | -- | -- | 2.61 |
| ZnO | 1.75 | 1.00 | -- | -- | 1.10 |
| BaO | 0.78 | 0.75 | -- | -- | -- |
| Li₂O | 3.52 | 2.80 | 1.20 | 4.60 | 2.71 |
| Na₂O | -- | -- | -- | -- | 0.40 |
| K₂O | -- | -- | 0.50 | -- | -- |
| As₂O₃ | 1.00 | 0.75 | -- | 0.50 | 0.95 |
| V₂O₅ | 0.44 | -- | -- | -- | -- |

| Composition No. Constituents | VI | VII | VIII | IX | |
|---|---|---|---|---|---|
| SiO₂ | 69.20 | 65.73 | 66.28 | 69.28 | |
| B₂O₃ | -- | -- | -- | 10.46 | |
| Al₂O₃ | 18.09 | 20.40 | 20.40 | 20.26 | |
| TiO₂ | 4.77 | 3.07 | 3.07 | -- | |
| ZrO₂ | -- | 1.81 | 1.81 | -- | |
| MgO | 2.60 | 1.01 | 1.01 | -- | |
| ZnO | 1.11 | 1.00 | 1.01 | -- | |
| BaO | -- | 1.76 | 1.76 | -- | |
| Li₂O | 2.71 | 3.87 | 3.87 | -- | |
| Na₂O | 0.40 | 0.40 | 0.40 | -- | |
| K₂O | -- | -- | 0.50 | -- | |
| As₂O₃ | 0.65 | 0.95 | 0.95 | -- | |
| V₂O₅ | 0.45 | -- | 0.45 | -- | |

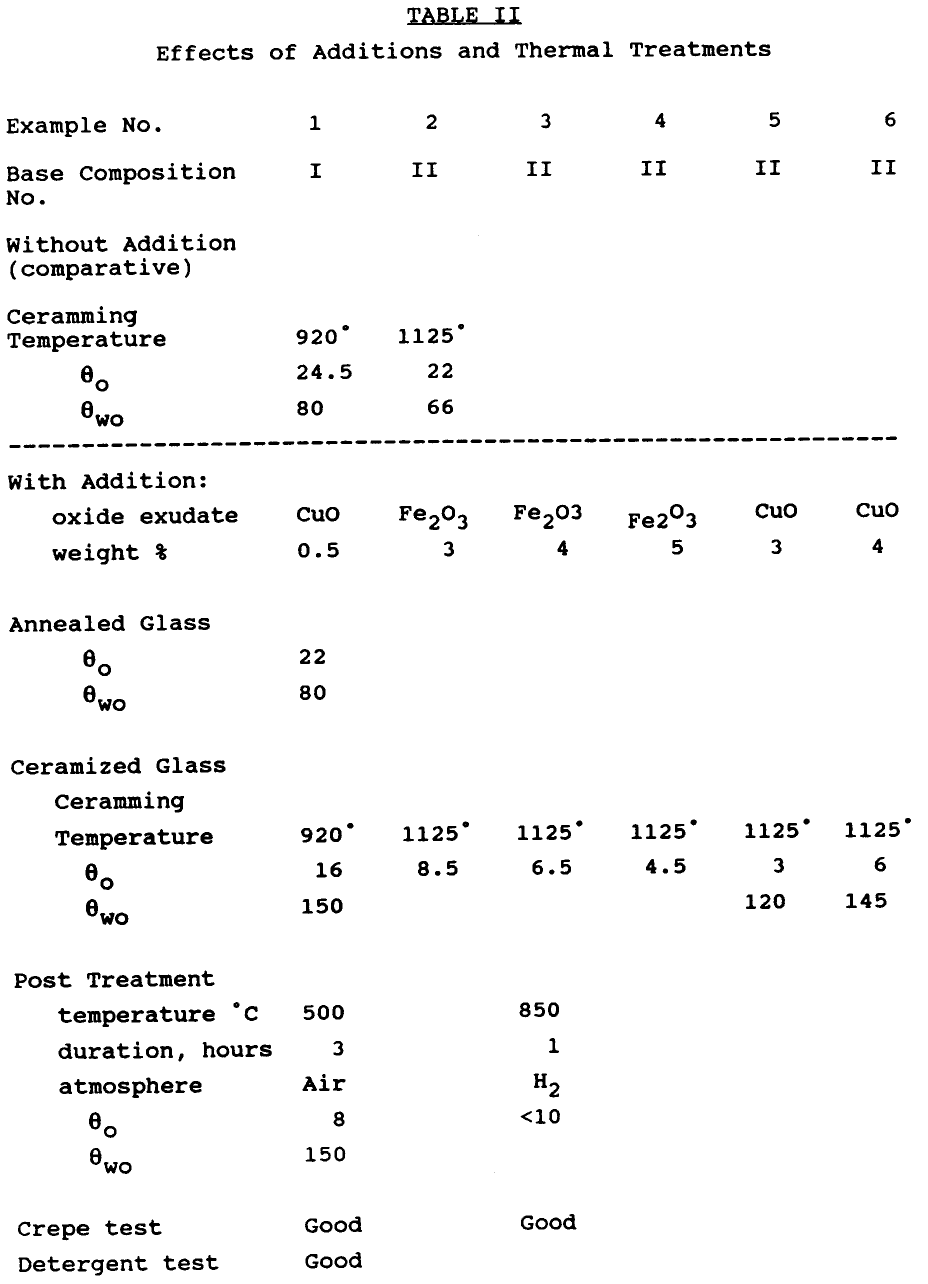

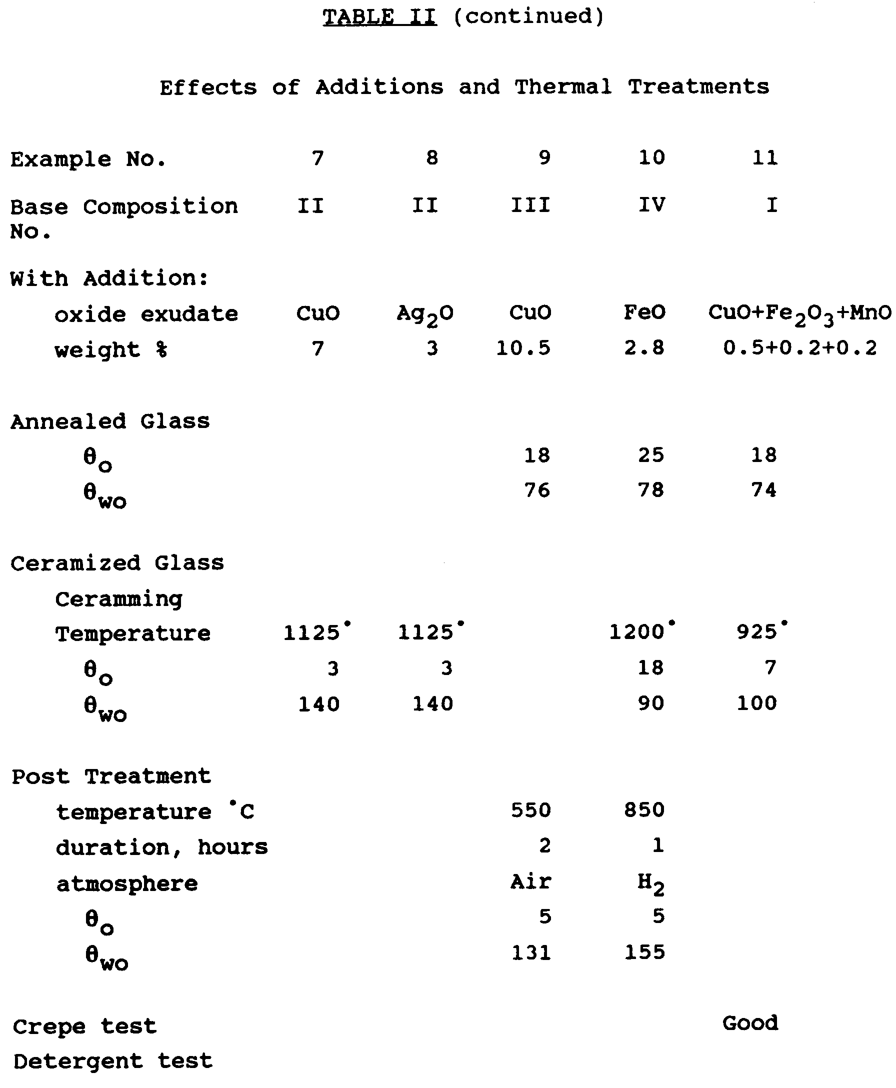

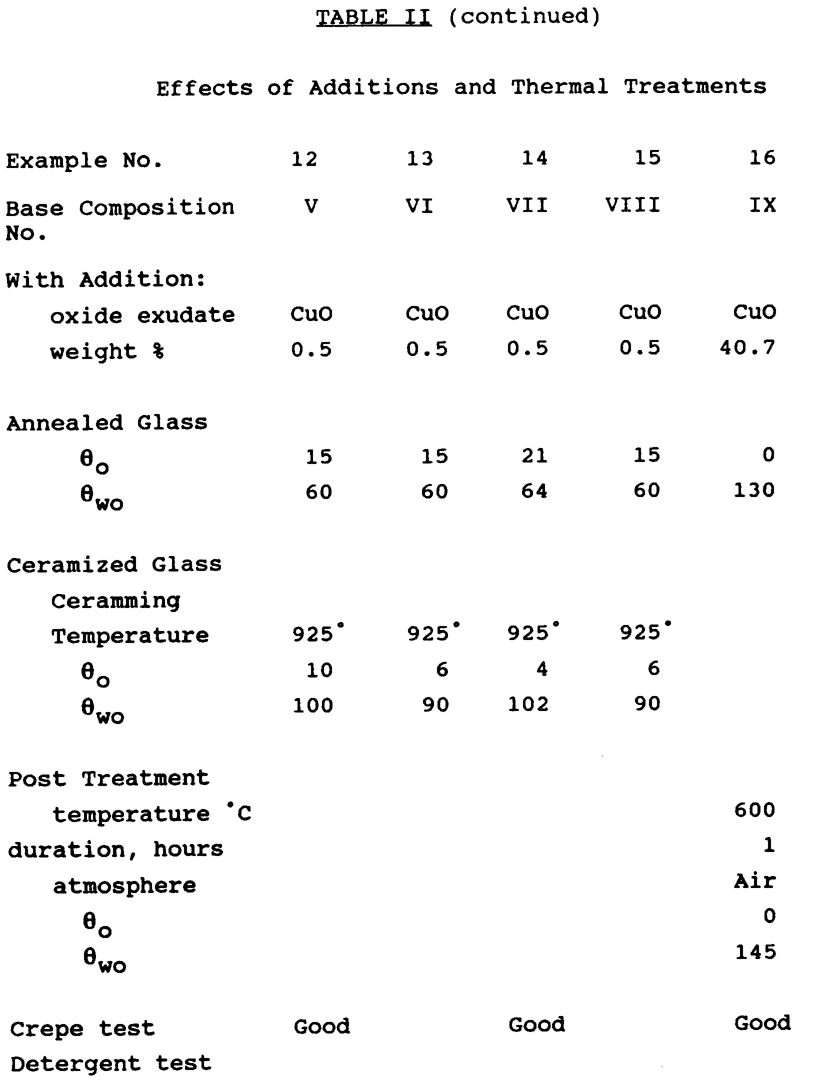

### Examples 17 and 18

One utilized two compositions of glaze to manufacture glazed steel cooking articles. The glaze compositions are indicated in Table III. The glazes were fired for 5 minutes at 825°C on the steel substrate, then subjected to heating at 550°C for 15 hours to bring about exudation of the oxide exudate. The results of the tests performed on the cooking articles manufactured in this way are summarized in Table IV. As a comparison, Table IV also mentions the results obtained on a cooking article manufactured with a conventional glaze available under the name L154 from the company Ferro France S.A., Saint-Dizier, France.

One sees from the results that the glazed articles according to the invention are greatly superior to the glazed article of the prior art.

It should be noted that results similar to those obtained with the glaze of Example 17 were obtained by varying the proportion of CuO between 8 and 30 weight percent in the glaze composition. One also substitutes the iron oxide or the manganese oxide for copper oxide. This requires raising the firing temperature to 925°C (instead of 825°C). With a level of 30 weight percent iron oxide or manganese oxide, the anti-adhesive properties obtained were improved with respect to the control, but not as good as those obtained with copper oxide used as oxide exudate.

Finally, instead of the 15-hour exudation treatment, one reduced the latter to 2 hours only. The anti-adhesive properties of the final article were not appreciably altered.

**TABLE III**

| Glaze Compositions | | |
|---|---|---|
| Oxide Constituents | Glaze No. 17 in Weight % | Glaze No. 18 in Weight % |
| SiO₂ | 42.90 | 50.80 |
| B₂O₃ | 11.80 | 12.10 |
| Al₂O₃ | 6.40 | 2.10 |
| Li₂O₃ | -- | 1.90 |
| Na₂O | 13.60 | 11.50 |
| K₂O | 4.50 | 0.60 |
| MgO | -- | 0.20 |
| CaF₂ | 7.30 | 1.50 |
| BaO | -- | 2.10 |
| TiO₂ | -- | 3.80 |
| ZrO₂ | -- | 0.30 |
| Fe₂O₃ | -- | 0.20 |
| CoO | 0.70 | 0.30 |
| NiO | -- | 0.90 |
| CuO | 9.20 | 9.20 |
| MnO₂ | 3.60 | 2.50 |

**TABLE IV**

| Behavior of the Glazed Steel Articles | | | |
|---|---|---|---|
| Glaze | | After cooking for 5 min. at 825°C | 15 h more at 550°C |
| L154 Ferro (comparative) | θₒ | 19 | 29 |
| | θwₒ | 79 | 74 |
| | Crepe Test | -- | Bad |
| Glaze No. 17 | θₒ | 27.5 | 0 |
| | θwₒ | 50.0 | 93 |
| | Crepe Test | -- | Good |
| Glaze No. 18 | θₒ | 19 | 15 |
| | θwₒ | 90 | 114 |
| | Crepe Test | -- | Good |

## Claims

1. Articles for cooking food, of which at least the surface part of at least the part of these articles that is intended to be in contact with the foods is constituted of a boroaluminosilicate glass or of a glass-ceramic of the Li₂O-Al₂O₃-SiO₂ system in which a solid solution of β- quartz (also called β-eucryptite) or of β-spodumene constitutes the sole or predominant crystalline phase, characterized by the fact that said glass or said glass-ceramic contains 0.5 to 33 weight percent, with respect to the total weight of the glass or modified glass-ceramic, of at least one metal oxide selected from the group consisting of copper oxides, iron oxides, manganese oxides, and silver oxides, the concentration of said metal oxide being at least three times higher on the surface of the article than within the article, and said surface part of said articles manifesting a reduced adherence with regard to foods after it has been covered with a film of alimentary grease material.

2. Articles according to claim 1, characterized by the fact that the metal oxide is selected from the copper oxides.

3. Articles according to claim 1, characterized by the fact that the glass or glass-ceramic constitutes all of the part of the article intended to come in contact with the foods.

4. Articles according to claim 1, characterized by the fact that the glass or glass-ceramic constitutes a coating applied onto a different substrate.

5. A process for manufacturing an article as defined in claim 3, characterized by the fact that it consists of incorporating 0.5 to 50 parts by weight of at least one metal oxide selected from the group consisting of copper oxides, iron oxides, manganese oxides, and silver oxides in 100 parts by weight of an initial vitrifiable batch, then melting this batch, cooling the molten mass of glass into its transformation range and converting it into an article of the desired shape, then, in some order, subjecting the glass article to a first thermal treatment causing exudation of said metal oxide, and, if applicable, to a second thermal treatment to bring about the conversion of the glass into a glass-ceramic.

6. A process according to claim 5, characterized by the fact that the article is constituted of boroaluminosilicate glass with 1 to 40 parts by weight of metal oxide being incorporated in it.

7. A process according to claim 5, characterized by the fact that the article consists of a glass-ceramic with 0.5 to 10 parts of the metal oxide being incorporated in it.

8. A manufacturing process as defined in claim 4, characterized by the fact that it consists of incorporating 0.5 to 50 percent by weight of at least one metal oxide selected from the group consisting of copper oxides, iron oxides, manganese oxides, and silver oxides into a glaze composition based on boroaluminosilicate glass, applying a layer of this glaze composition onto a suitable substrate and heating the applied layer until it melts, then subjecting the resulting glazed article to a thermal treatment causing exudation of the metal oxide.

9. A process according to claim 8, characterized by the fact that 8 to 30 parts by weight of the metal oxide are incorporated.

10. A process according to claim 5 or 6, characterized by the fact that the exudation treatment is conducted at a temperature of at least 500°C.

## Patentansprüche

1. Gegenstände zum Kochen von Nahrungsmitteln, bei denen zumindest der Oberflächenteil zumindest des Teils dieser Gegenstände, der in Kontakt mit den Nahrungsmitteln gebracht werden soll, aus einem Boroaluminosilikatglas oder einer Glaskeramik des Li₂O-Al₂O₃-SiO₂-Systems gebildet ist, in dem eine Festlösung aus β-Quarz (auch β-Eukryptit genannt) oder aus β-Spodumen die einzige oder die vorherrschende Kristallphase bildet, dadurch gekennzeichnet, daß das Glas oder die Glaskeramik 0,5 bis 33 Gewichtsprozent, bezogen auf das Gesamtgewicht des Glases oder der modifizierten Glaskeramik, wenigstens eines Metalloxids, ausgewählt aus der Gruppe, bestehend aus Kupferoxiden, Eisenoxiden, Manganoxiden und Silberoxiden, enthält, die Konzentration des Metalloxids an der Oberfläche des Gegenstands zumindest 3mal höher ist als im Gegenstand, und dieser Oberflächenteil der Gegenstände eine verminderte Haftung in Bezug an die Nahrungsmittel besitzt, nachdem er mit einem Film aus Speisefettmaterial bedeckt wurde.

2. Gegenstände nach Anspruch 1, dadurch gekennzeichnet, daß das Metalloxid aus den Kupferoxiden ausgewählt ist.

3. Gegenstände nach Anspruch 1, dadurch gekennzeichnet, daß das Glas oder die Glaskeramik den gesamten Teil des Gegenstandes bildet, der in Kontakt mit den Nahrungsmitteln gebracht werden soll.

4. Gegenstände nach Anspruch 1, dadurch gekennzeichnet, daß das Glas oder die Glaskeramik eine Beschichtung bildet, die auf ein unterschiedliches Substrat aufgebracht wird.

5. Verfahren zur Herstellung eines Gegenstandes nach Anspruch 3, dadurch gekennzeichnet, daß es aus nachfolgendem besteht: aufnehmen von 0,5 bis 50 Gewichtsteilen wenigstens eines Metalloxids, ausgewählt aus der Gruppe, bestehend aus Kupferoxiden, Eisenoxiden, Manganoxiden und Silberoxiden, in 100 Gewichtsteile eines vitrifizierbaren Startansatzes, anschließendes Schmelzen dieses Ansatzes, Abkühlen der geschmolzenen Glasmasse auf seinen Transformationsbereich und Umwandeln des Glases zu einem Gegenstand mit der gewünschten Gestaltung, anschließend, in einer gewissen Reihenfolge, Durchführen einer ersten Wärmebehandlung des Glasgegenstandes, wodurch eine Ausscheidung des Metalloxids bewirkt wird, und, falls anwendbar, einer zweiten Wärmebehandlung, um die Umwandlung des Glases zu einer Glaskeramik zu bewirken.

6. Verfahren nach Anspruch 5, dadurch gekennzeichet, daß der Gegenstand aus einem Boroaluminosilikatglas mit 1 bis 40 darin enthaltenen Gewichtsteilen eines Metalloxids gebildet ist.

7. Verfahren nach Anspruch 5, dadurch gekennzeichnet , daß der Gegenstand aus einer Glaskeramik mit 0,5 bis 10 darin enthaltenen Gewichtsteilen des Metalloxids besteht.

8. Herstellungsverfahren nach Anspruch 4, dadurch gekennzeichnet, daß es aus folgendem besteht: aufnehmen von 0,5 bis 50 Gewichtsprozent zumindest eines Metalloxids, ausgewählt aus der Gruppe, bestehend aus Kupferoxiden, Eisenoxiden, Manganoxiden und Silberoxiden, in eine Glasurzusammensetzung, die auf einem Boroaluminosilikatglas basiert, Aufbringen einer Schicht dieser Glasurzusammensetzung auf ein geeignetes Substrat und Erhitzen der aufgebrachten Schicht bis zum Schmelzen, anschließend die Hitzebehandlung des erhaltenen glasierten Gegenstandes, um eine Ausscheidung des Metalloxids zu bewirken.

9. Verfahren nach Anspruch 8, dadurch gekennzeichnet, daß 8 bis 30 Gewichtsteile des Metalloxids aufgenommen werden.

10. Verfahren nach Anspruch 5 oder 6, dadurch gekennzeichnet, daß die Ausscheidungsbehandlung bei einer Temperatur von wenigstens 500°C durchgeführt wird.

## Revendications

1. Articles pour cuire des aliments, dont au moins la partie superficielle d'au moins la partie de ces articles qui est destinée à venir en contact avec les aliments est constituée d'un verre au boroaluminosilicate ou d'une vitrocéramique formé(e) du système Li₂O-Al₂O₃-SiO₂ dans lequel une solution solide de β-quartz (également dénommé β-eucryptite) ou d'un β-spodumène constitue la phase cristalline unique ou prédominante, caractérisés en ce que ledit verre ou ladite vitrocéramique contient 0,5 à 0,33 % en poids, par rapport au poids total du verre ou de la vitrocéramique modifiée, d'au moins un oxyde métallique sélectionné dans le groupe comprenant les oxydes de cuivre, les oxydes de fer, les oxydes de manganèse et les oxydes d'argent, la concentration dudit oxyde métallique à la surface de l'article étant au moins trois fois plus grande qu'à l'intérieur de l'article, et ladite partie de la surface dudit article présentant une adhérence réduite par rapport aux aliments après qu'elle a été revêtue d'un film de matière grasse alimentaire.

2. Articles selon la revendication 1, caractérisés en ce que l'oxyde métallique est sélectionné parmi les oxydes de cuivre.

3. Articles selon la revendication 1, caractérisés en ce que le verre ou la vitrocéramique constitue la totalité de la partie de l'article destinée à venir en contact avec les aliments.

4. Articles selon la revendication 1, caractérisés en ce que le verre ou la vitrocéramique constitue un revêtement appliqué sur un substrat différent.

5. Procédé de fabrication d'un article selon la revendication 3, caractérisé en ce qu'il consiste à incorporer 0,5 à 50 parties en poids d'au moins un oxyde métallique sélectionné dans le groupe comprenant les oxydes de cuivre, les oxydes de fer, les oxydes de manganèse et les oxydes d'argent dans 100 parties en poids d'une charge vitrifiable initiale, à fondre ensuite cette charge, à refroidir la masse fondue de verre dans sa plage de transformation et à la convertir en un article de la forme souhaitée, puis, dans un certain ordre, à soumettre l'article de verre à un premier traitement thermique provoquant l'exsudation dudit oxyde métallique et, le cas échéant, à un deuxième traitement thermique pour provoquer la conversion du verre en une vitrocéramique.

6. Procédé selon la revendication 5, caractérisé en ce que l'article est constitué de verre au boroaluminosilicate auquel on incorpore 1 à 40 parties en poids de l'oxyde métallique.

7. Procédé selon la revendication 5, caractérisé en ce que l'article est constitué d'une vitrocéramique à laquelle on incorpore 0,5 à 10 parties de l'oxyde métallique.

8. Procédé de fabrication selon la revendication 4, caractérisé en ce qu'il consiste à incorporer 0,5 à 50 % en poids d'au moins un oxyde métallique sélectionné dans le groupe comprenant les oxydes de cuivre, les oxydes de fer, les oxydes de manganèse et les oxydes d'argent à une composition de vitrification à base de verre au boroaluminosilicate, à appliquer une couche de cette composition de vitrification sur un substrat approprié et à chauffer la couche appliquée jusqu'à ce qu'elle fonde, à soumettre ensuite l'article vitrifié obtenu à un traitement thermique provoquant l'exsudation de l'oxyde métallique.

9. Procédé selon la revendication 8, caractérisé en ce qu'on incorpore 8 à 30 parties en poids de l'oxyde métallique.

10. Procédé selon la revendication 5 ou 6, caractérisé en ce que le traitement d'exsudation est réalisé à une température d'au moins 500°C.
